Europäisches Patentamt

European Patent Office

Office européen des brevets

(19)

(11) Veröffentlichungsnummer: **0 048 680**
**B1**

(12) # EUROPÄISCHE PATENTSCHRIFT

(45) Veröffentlichungstag der Patentschrift:
**12.12.84**

(21) Anmeldenummer: **81710045.6**

(22) Anmeldetag: **15.09.81**

(51) Int. Cl.³: **F 16 K 11/085, F 16 K 39/06**

(54) **Hydraulisches Drehventil.**

(30) Priorität: 20.09.80 DE 3035661
01.08.81 DE 3130596

(43) Veröffentlichungstag der Anmeldung:
31.03.82 Patentblatt 82/13

(45) Bekanntmachung des Hinweises auf die Patenterteilung:
12.12.84 Patentblatt 84/50

(84) Benannte Vertragsstaaten:
AT BE CH DE FR GB IT LI LU NL SE

(56) Entgegenhaltungen:
DE - B - 1 061 146
DE - B - 1 062 074
DE - B - 1 111 472
DE - B - 1 245 663
DE - C - 1 159 230
FR - A - 2 441 115
GB - A - 992 977
US - A - 2 591 216

(73) Patentinhaber: **Wagner, Paul-Heinz, Haus Nr. 70,
D-5203 Much-Birrenbachshöhe (DE)**

(72) Erfinder: **Müller, Johann, D-5023 Much-Nesshoven (DE)**
Erfinder: **Hirtsiefer, Karl Richard, Köbach,
D-5206 Neunkirchen 1 (DE)**

(74) Vertreter: **Seiting, Günther, Dipl.-Ing. et al,
Deichmannhaus am Hauptbahnhof, D-5000 Köln 1 (DE)**

## Beschreibung

Die Erfindung betrifft ein hydraulisches Drehventil mit einem Gehäuse, das einen Druckanschluß, einen Tankanschluß sowie mindestens zwei an einen Verbraucher anschließbare Verbraucheranschlüsse aufweist, die mit einer zylindrischen Kammer verbunden sind, und mit einem in der Kammer drehbar angeordneten Ventilkörper, der jeweils über einen Teil seines Umfangs sich erstreckende, durch Dichtflächen voneinander getrennte Ausnehmungen aufweist, durch die jeweils der Druckanschluß und der Tankanschluß mit den Verbraucheranschlüssen verbindbar sind.

Bekannte hydraulische Drehventile dieser Art (FR-A-2 441 115 bzw. DE-B-1 111 472) weisen ein Gehäuse auf, in dem ein Küken in Form eines Drehschiebers angeordnet ist. Das Küken weist in seiner Umfangsfläche Ausnehmungen auf, über die ein an dem Gehäuse vorgesehener Druckanschluß mit dem einen Verbraucheranschluß und ein an dem Gehäuse vorgesehener Tankanschluß mit dem anderen Verbraucheranschluß verbindbar ist. Der Drehschieber kann durch Einwirkung einer äußeren Drehkraft gedreht werden, um den Ventilkörper in unterschiedliche Drehstellungen zu bringen und hierdurch den mit den Verbraucheranschlüssen verbundenen Verbraucher entweder in Vorwärtsrichtung oder in Rückwärtsrichtung antreiben. Außerdem ist es möglich, durch teilweises Verschließen der verschiedenen Anschlüsse durch den Ventilkörper eine Drosselung herbeizuführen, um den Verbraucher mit der vollen zur Verfügung stehenden Flüssigkeitsmenge oder nur mit einer gedrosselten Teilmenge zu versorgen. Der Verbraucher kann entweder ein Hydraulikmotor sein oder eine Kolben-Zylinder-Einheit, die über das Drehventil gesteuert wird. Da auf den Ventilkörper von der Seite des Druckanschlusses her der volle Druck einwirkt, der sehr groß sein kann, besteht die Gefahr, daß der Ventilkörper mit seiner Umfangsfläche gegen die gegenüberliegende Wand gedrückt wird und sich nicht mehr drehen läßt. Um dies zu vermeiden, sind bei den bekannten Drehventilen Entlastungsausnehmungen zu beiden Seiten derjenigen Ausnehmungen angeordnet, die zum Durchlassen der Flüssigkeiten bestimmt sind. Die Entlastungsausnehmungen stehen über Entlastungsbohrungen mit dem Druckanschluß in Verbindung, und sie bewirken, daß eine gleichmäßige Verteilung des Druckes über den Umfang des Ventilkörpers erfolgt, so daß die geschilderten Blockierungen nicht stattfinden können. Dies hat aber gleichzeitig zur Folge, daß der Ventilkörper zu jeder Zeit druckentlastet ist, so daß auch unbeabsichtigte Verdrehungen des Ventilkörpers leicht vorgenommen werden können. Andererseits wird der gesamte von der Druckquelle gelieferte Flüssigkeitsstrom, den das Drehventil durchläßt, zum Verbraucher gefördert. Eine sehr feine Dosierung kann mit dem Drehventil in der Regel nicht vorgenommen werden, so daß es schwierig ist, die dem Verbraucher zuzuführende Flüssigkeitsmenge exakt zu regulieren.

Der Erfindung liegt die Aufgabe zugrunde, ein hydraulisches Drehventil der eingangs genannten Art zu schaffen, mit dem der dynamische Flüssigkeitsdruck am Verbraucher auf einfache Weise kontinuierlich verändert werden kann und bei dem Druckentlastungskanäle und Druckentlastungsausnehmungen am Ventilkörper nicht unbedingt erforderlich sind, um die Verstellbarkeit des Ventilkörpers zu gewährleisten.

Zur Lösung dieser Aufgabe ist erfindungsgemäß vorgesehen, daß der Druckanschluß mit dem Tankanschluß über eine Kurzschlußleitung verbunden ist, in der sich eine Stelle mit veränderbarem Durchlaßquerschnitt befindet, und daß ein Betätigungsorgan vorgesehen ist, mit dem ein Drosselelement zur Veränderung des Durchlaßquerschnitts der Kurzschlußleitung verstellbar ist.

Wenn hierbei die Kurzschlußleitung voll geöffnet ist, ist sowohl der Ventilkörper als auch der angeschlossene Verbraucher im wesentlichen drucklos. Der Förderstrom des Hydraulikmediums läuft also quasi drucklos von der Druckquelle in den Tank. Der angeschlossene Verbraucher ist in diesem Zustand völlig kraftfrei. Der Ventilkörper ist ebenfalls frei von Radialkräften und kann ohne den zuvor beschriebenen Druckausgleich in die gewünschte Arbeitsstellung gedreht werden. Durch Verstellen des Betätigungsorgans wird der Durchflußquerschnitt der Kurzschlußleitung verändert, so daß der Kurzschlußstrom zwischen einem ungedrosselten Zustand und der völligen Absperrung stetig verändert werden kann. Damit wird der dynamische Flüssigkeitsdruck am Verbraucher kontinuierlich verändert. Dies ist insbesondere beim Einschalten des Verbrauchers günstig, um z. B. ein langsames Anfahren des Verbrauchers, beispielsweise eines Hydraulikmotors, zu bewirken. Wenn die Kurzschlußleitung stark gedrosselt oder ganz abgesperrt ist, wirkt auf den Ventilkörper der Druck der Druckquelle ein. Wenn die Radialkräfte des Ventilkörpers nicht kompensiert werden, wird der Ventilkörper durch den Hydraulikdruck in der jeweiligen Stellung festgehalten, so daß eine manuelle Verstellung in diesem Zustand nicht möglich ist. Dies kann erwünscht sein, um sicherzustellen, daß Verstellungen des Ventilkörpers nur im entspannten (drucklosen) Zustand des Ventils durchgeführt werden.

Bei einer bevorzugten Ausführungsform eines derartigen Ventils ist das Drosselelement in Richtung auf die vollständige Öffnung der Kurzschlußleitung vorgespannt. Diese Vorspannung kann durch eine Feder und/oder durch den Hydraulikdruck erfolgen. Durch sie wird erreicht, daß das Ventil drucklos ist, wenn das Betätigungsorgan nicht entgegen der Vorspannung betätigt wird. Am Verbraucher wird also nur so lange ein Druck aufrechterhalten, wie die Bedienungsperson auf das Betätigungsorgan einwirkt. Läßt die Bedienungsperson das Betätigungsorgan los, dann wird der Verbraucher von selbst drucklos. Eine solche Funktionsweise ist insbesondere für das Steuerventil eines hydraulischen Kraftschraubers geeignet, der manuell gesteuert wird. Der Hydraulikmotor ist nur so lange eingeschaltet, wie das Betätigungsorgan manuell betätigt wird. Wird das Betätigungsorgan losgelassen, dann wird die Kurzschlußleitung infolge der auf das Drosselement einwirkenden Vorspannung freigegeben, und der Hydraulikmotor (Verbraucher) wird drucklos.

Bei hydraulischen Geräten, die von einer Bedienungsperson geführt bzw. in der Hand gehalten werden, besteht die Gefahr, daß der Kraftantrieb eingeschaltet ist, die Bedienungsperson aber nicht imstande ist, mit ihrer Körperkraft das Gerät festzuhalten. In diesem Fall kann es passieren, daß der von dem Ventil gesteuerte und mit dem Ventilgehäuse verbundene Hydraulikmotor gegenüber dem Werkstück rotiert. Die Anschlußschläuche würden dabei aufgewickelt und würden eine große Gefahr für die Bedienungsperson darstellen. Um zu vermeiden, daß die Anschlußschläuche und das Betätigungsorgan bei einer fehlerhaften Handhabung des Gerätes rotieren und die Bedienungsperson dadurch gefährdet wird, ist in vorteilhafter Weiterbildung der Erfindung vorgesehen, daß der Druckanschluß, der Tankanschluß und das Betätigungsorgan an einem zweiten Gehäuseteil angebracht sind, welcher relativ zu dem die Kammer mit dem Ventilkörper enthaltenden ersten Gehäuseteil frei drehbar ist, und daß die Verbindung des Druckanschlusses und des Tankanschlusses mit der Kammer über Ringnuten erfolgt.

Gemäß einer zweckmäßigen Ausgestaltung der Erfindung ist vorgesehen, daß die Ausnehmungen eine solche Umfangserstreckung haben, daß in jeder möglichen Drehstellung des Ventilkörpers der Druckanschluß mit einem der Verbraucheranschlüsse und der Tankanschluß mit dem anderen Verbraucheranschluß verbunden ist und daß der Druckanschluß auf zwei parallelen Wegen über zwei Ausnehmungen an den Verbraucheranschlüssen vorbei mit dem Tankanschluß verbindbar ist.

Im folgenden wird unter Bezugnahme auf die Zeichnungen ein Ausführungsbeispiel der Erfindung näher erläutert, wobei die Fig. 1 bis 12 lediglich verschiedene bekannte Ausführungsformen von Ventilkörpern beschreiben. Es zeigt

Fig. 1 ein Längsschnitt durch das Gehäuse mit eingesetztem Ventilkörper, der sich in der Neutralstellung befindet,

Fig. 2 einen Querschnitt durch das Drehventil nach Fig. 1 entsprechend der Linie II-II,

Fig. 3 einen Schnitt entlang der Linie III-III von Fig. 2,

Fig. 4 einen Querschnitt durch das Drehventil in der einen Endstellung des Ventilkörpers,

Fig. 5 einen Querschnitt gemäß Fig. 4 während des Verstellens des Ventilkörpers in Richtung auf die andere Endstellung,

Fig. 6 einen Querschnitt gleich demjenigen der Fig. 4 in der zweiten Endstellung des Ventilkörpers,

Fig. 7 eine perspektivische Darstellung des Ventilkörpers,

Fig. 8 eine perspektivische Darstellung der Drehbegrenzungsvorrichtung an dem Ventilkörper,

Fig. 9 eine zweite Ausführungsform des Ventilkörpers,

Fig. 10 eine weitere Variante des Ventilkörpers,

Fig. 11 eine Ausführungsform des Gehäuses, das in Verbindung mit dem Ventilkörper nach Fig. 10 verwendbar ist,

Fig. 12 eine weitere Ausführungsform eines Gehäuses für den Ventilkörper nach Fig. 10,

Fig. 13 einen Längsschnitt durch ein erfindungsgemäßes Drehventil mit manuell drosselbarer Kurzschlußleitung und

Fig. 14 einen schematischen Querschnitt durch das Drehventil der Fig. 13 gemäß Linie XIV-XIV.

Die dargestellten Drehventile dienen beispielsweise dazu, eine hydraulische Druckquelle und einen Tank an eine hydraulische Antriebseinrichtung anzuschließen, beispielsweise einen Hydraulikmotor oder eine Kolben/Zylinder-Einheit. Derartige hydraulische Antriebseinrichtungen, die im folgenden als »Verbraucher« bezeichnet werden, haben in der Regel zwei Anschlußleitungen, die wechselseitig an die Druckquelle und den Tank angeschlossen werden, um eine Bewegung des Verbrauchers in der einen Richtung oder in Gegenrichtung durchzuführen.

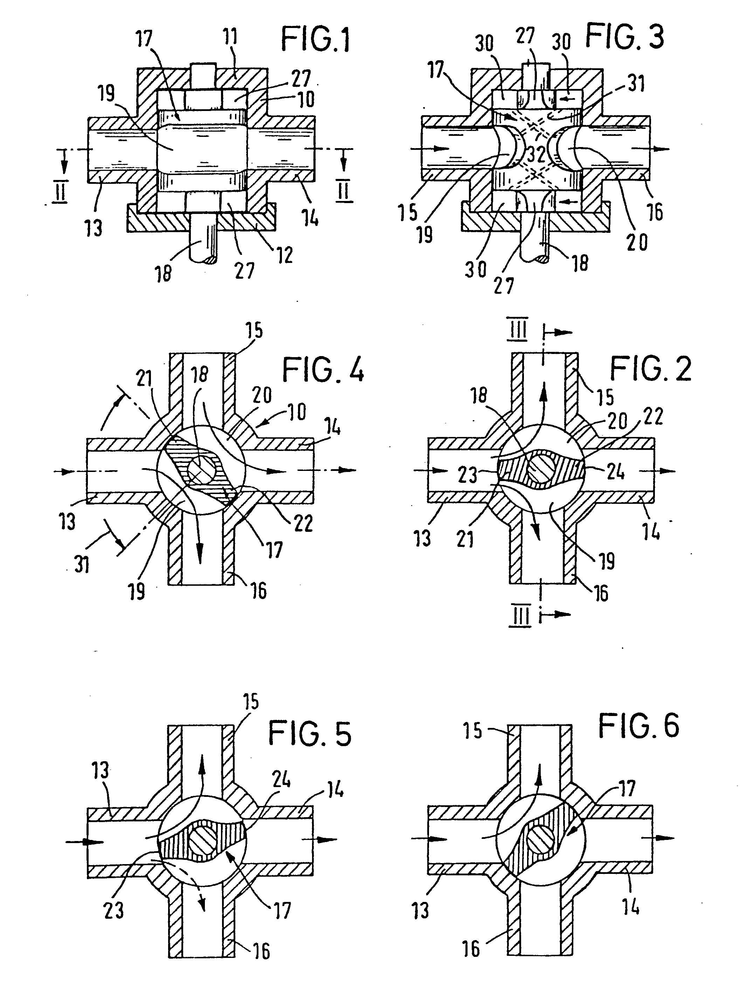

Das Drehventil der Fig. 1 bis 6, mit dem der Verbraucher an die Druckquelle und den Tank angeschlossen wird und das gleichzeitig zur Regulierung der Arbeitsstellung des Verbrauchers dient, weist ein zylindrisches Gehäuse 10 auf, dessen eine Stirnseite 11 geschlossen ausgebildet und dessen andere Stirnseite mit einer Kappe 12 druckdicht verschlossen ist. Das Gehäuse 10 weist vier Anschlußstutzen auf, die kreuzförmig von der zylindrischen Umfangswand abstehen, nämlich den Druckanschluß 13, den Tankanschluß 14 und die beiden Verbraucheranschlüsse 15, 16, die an den Verbraucher angeschlossen sind. Jeder der Anschlüsse 13, 14, 15, 16 besteht aus einer zylindrischen Bohrung, die radial in das Gehäuse 10 hineinführt.

In dem Gehäuse 10 befindet sich der Ventilkörper 17, der im wesentlichen zylindrisch ausgebildet ist und mit einer Achse 18 in abgedichteten Lagern an den Stirnseiten 11 und 12 des Gehäuses 10 gelagert ist. Die Achse 18 ist aus der einen Stirnseite 12 herausgeführt, um von Hand oder mit einem Verstellmechanismus gedreht zu werden.

Der Ventilkörper 17 weist zwei Ausnehmungen 19, 20 auf, die sich jeweils um einen Winkel von etwas weniger als 180° um seinen Umfang erstrecken und in Höhe der Anschlüsse 13, 14, 15, 16 verlaufen. Die Ausnehmungen 19, 20 sind nutartige Einschnitte die radial bis in die unmittelbare Nähe der Achse 18 reichen und zwischen denen sich Stege 21, 22 befinden, deren Enden die Umfangsdichtflächen 23, 24 bilden. Die Stege 21, 22 erstrecken sich längs eines gemeinsamen Durchmessers des Ventilkörpers 17.

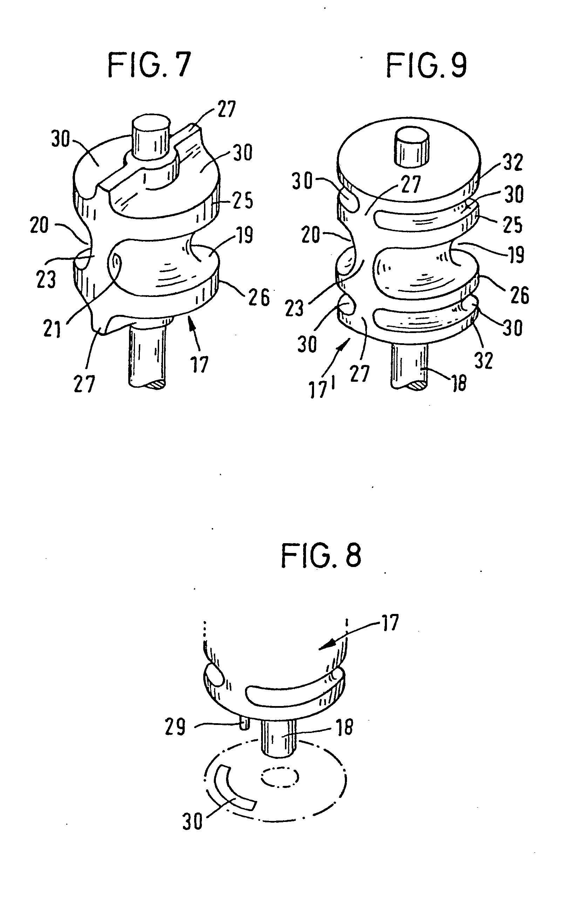

Wie Fig. 7 zeigt, sind die Ausnehmungen 19, 20 zu beiden Seiten durch zylindrische Wandlungsteile 25, 26 begrenzt, die an ihren Stirnseiten radiale Rippen 27 tragen, welche abdichtend an den Stirnseiten 11, 12 des Gehäuses anliegen. Die Rippen 17 verlaufen deckungsgleich mit den Stegen 21, 22. Ihre Höhe entspricht etwa der halten Breite einer Ausnehmung 19 bzw. 20.

Die Drehbegrenzungsvorrichtung besteht aus einem Stift 29 der parallel zur Achse 18 von dem Ventilkörper 17 absteht und in einen bogenförmigen Schlitz 30 des Gehäuses 10 hineinragt (Fig. 8). Der Schlitz 30, der koaxial zur Achse 18 verläuft, erstreckt sich über einen Winkelbereich von ca. 90°.

In den Fig. 1—3 ist das Drehventil in seiner Neutralstellung bzw. Mittelstellung dargestellt. Die Umfangsdichtfläche 23 liegt dabei zentral in der Öffnung des Druckanschlusses 13, und die Umfangsdichtfläche 24 liegt zentral in der Öffnung des Tankanschlusses 14. Jede der Umfangsdichtflächen 23, 24 erstreckt sich nur über einen Teilquerschnitt der betreffenden Öffnung, so daß der Druckanschluß 13 und der Tankanschluß 14 nicht verschlossen werden. Der Druck der Hydraulikflüssigkeit gelangt also von dem Druckanschluß 13 durch die Ausnehmungen 19, 20 zu den Verbraucheranschlüssen 15, 16 und gleichzeitig zum Tankanschluß 14. Der Verbraucher befindet sich somit in einem Schwebezustand, d. h. in seinen beiden Anschlußleitungen herrscht der gleiche Druck, bei dem es sich um einen mittleren Druck handelt.

Bei der Stellung, die der Ventilkörper 17 gemäß Fig. 4 einnimmt, dichtet der Steg 21 den Bereich zwischen dem Druckanschluß 13 und dem Verbraucheranschluß 15 ab, während die Öffnung des Druckanschlusses 13 vollständig freigegeben und über die Ausnehmung 19 mit dem Verbraucheranschluß 16 verbunden wird. In gleicher Weise dichtet der Steg 22, der mit seiner Umfangsdichtfläche 24 an der Innenwand des Gehäuses 10 anliegt, die Verbindung zwischen dem Verbraucheranschluß 16 und dem Tankanschluß 14 ab, während der voll geöffnete Verbraucheranschluß 15 mit dem ebenfalls voll geöffneten Tankanschluß 14 über die Ausnehmung 20 verbunden ist. In dieser Stellung wird der Verbraucher in seiner einen Richtung angetrieben. Der gesamte, durch die Drehbegren-zungsvorrichtung 29, 30 vorgegebene Verstellbe-reich des Ventilkörpers ist durch den Doppelpfeil 31 in Fig. 4 bezeichnet.

Wenn der Ventilkörper 17 aus der Extremstellung in Fig. 4 im Gegenuhrzeigersinn gedreht wird, gelangt er zunächst in die Mittelstellung, die in den Fig. 1—3 angegeben ist. Bei weiterer Drehung der Achse 18 wird die in Fig. 5 dargestellte Position eingenommen, bei der die Um-fangsdichtfläche 23 einen größeren Quer-schnittsbereich von dem Druckanschluß 13 zum Verbraucheranschluß 15 und einen kleineren Querschnittsbereich von dem Druckanschluß 13 zum Verbraucheranschluß 16 freigibt. Da gleichzeitig die Umfangsdichtfläche 24 einen kleineren Querschnittsbereich vom Verbraucheranschluß 15 zum Tankanschluß 14 und einen größeren Querschnittsbereich vom Verbraucheranschluß 16 zum Tankanschluß 14 freigibt, entsteht im Verbraucheranschluß 15 ein höherer Druck als im Verbraucheranschluß 16. Auch im stationären Zustand wird dieser Druckunterschied aufrechterhalten, so daß der Verbraucher gezielt in einer bestimmten Position festgehalten werden kann, in der die Druckdifferenz der Verbraucheranschlüsse 15 und 16 der auf den Verbraucher einwirkenden Stellkraft entspricht.

In Fig. 6 ist schließlich die andere Extremstellung des Ventilkörpers 17 dargestellt, in der der Ventilkörper den Druckanschluß voll mit dem Verbraucheranschluß 15 und den Tankanschluß 14 voll mit dem Verbraucheranschluß 16 verbindet, die Verbraucheranschlüsse 15, 16 jedoch gegeneinander abdichtet. In diesem Zustand wird der Verbraucher mit maximalem Druck in die Rückzugsposition hineingefahren.

Da auf der dem Druckanschluß 15 zugewandten Seite des Ventilkörpers 17 ein größerer Druck herrscht als auf der dem Tankanschluß 16 zugeführten Seite, würde der Ventilkörper 17 normalerweise in Richtung auf den Tankanschluß 16 gedrückt. Um dies zu verhindern, sind an jeder Stirnseite des Ventilkörpers 17 im Gehäuse 10 zwei Druckentlastungskammern 30 vorgesehen, die durch die Stege 27 voneinander getrennt sind. Eine der Druckentlastungskammern 30 ist über Kanäle 31 mit der Ausnehmung 19 und die andere Druckentlastungskammer 30 über Kanäle 32 mit der Ausnehmung 20 verbunden. Beide Druckentlastungskammern 30 sind durch die Stege 27 voneinander getrennt. In derjenigen Druckentlastungskammer 30, die den Druckanschluß 15 abgewandt ist, bildet sich jeweils der volle Druck aus. Da die Druckentlastungskammern 30 jeweils etwa die halbe Breite des Druckanschlusses 15 haben, wirken die beiden Druckentlastungskammern 30, die dem Druckanschluß 15 abgewandt sind, jeweils den Aufbau einer Entlastungs-Gegenkraft, durch die der Ventilkörper 17 annähernd im Gleichgewicht gehalten wird.

Bei dem Ausführungsbeispiel nach Fig. 9 weist der Ventilkörper 17' an jeder Stirnseite eine zusätzliche Platte 32 auf, die die Druckentlastungskammern 30 begrenzt. Die Platten 32 haben den gleichen Durchmesser wie die zylindrischen Bereiche 25, 26 und liegen parallel zu den Stirnseiten des Gehäuses 10.

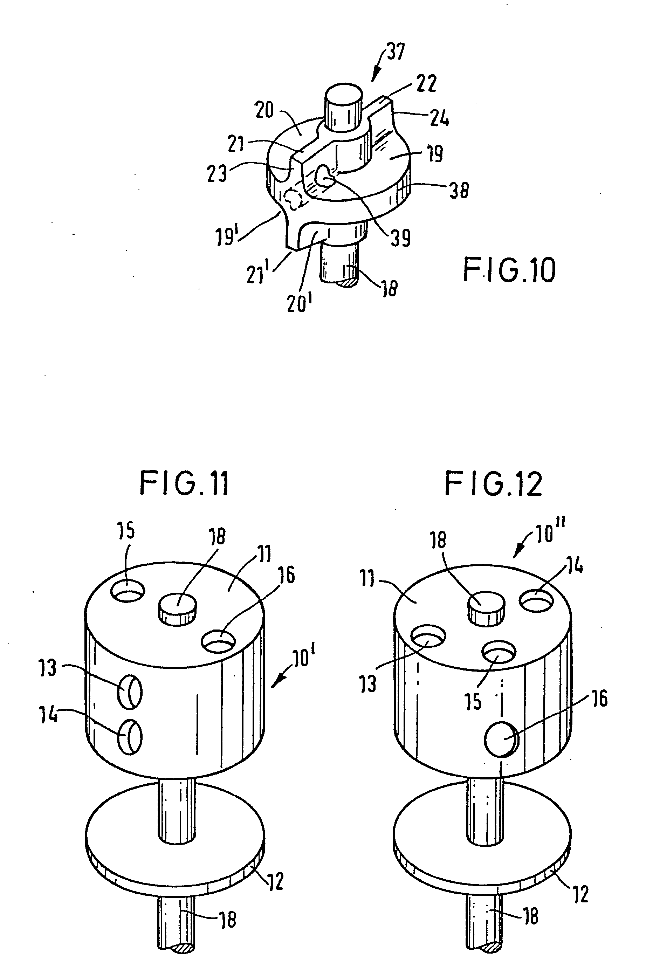

Der in Fig. 10 dargestellte Ventilkörper 37 weist einen zylindrischen Mittelteil 38 auf, dessen Außenflächen abdichtend an der Innenfläche des Gehäuses 10' gleitet. Von der oberen Stirnseite des zylindrischen Mittelteils 38 stehen Stege 21, 22 ab, die entlang eines gemeinsamen Durchmessers des Ventilkörpers angeordnet sind und mit ihren Stirnseiten an den Stirnwänden 11, 12 des Gehäuses 10 gleiten. Die Umfangsdichtflächen 23, 24 der Stege 21 gleiten an der Innenfläche der Gehäusewand.

In gleicher Weise stehen Stege, von denen nur der Steg 21' in Fig. 10 sichtbar ist, von der unteren Stirnseite des zylindrischen Mittelteiles 38 ab. Die Stege 21 und 21' sind — in Draufsicht — deckungsgleich, d. h. die Stege an der Oberseite und an der Unterseite des Mittelteiles 38 liegen in einer gemeinsamen Vertikalebene.

Durch das Mittelteil 38 und die insgesamt vier Stege werden vier Quadranten oder Ausnehmungen 19, 20, 19', 20' gebildet. Die Ausnehmung 19 steht mit der diagonal gegenüberliegenden Ausnehmung 19' über eine Bohrung 39 in Verbindung. In gleicher Weise stehen die beiden Ausnehmungen 20 und 20' durch eine (in der Zeichnung nicht sichtbare) Schrägbohrung miteinander in Verbindung.

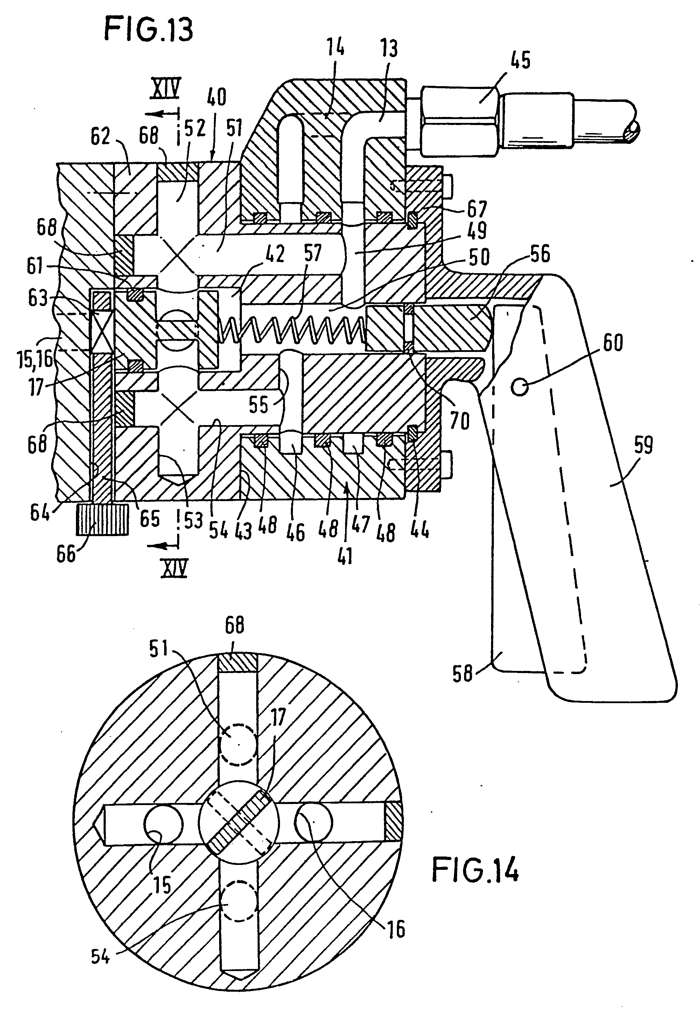

Da die Quadranten bzw. Ausnehmungen 19, 20, 19', 20' teilweise von den Stirnwänden 11, 12 des Gehäuses 10 und teilweise von der Umfangswand des Gehäuses begrenzt werden, können die Anschlüsse 13 bis 16 wahlweise an einer der Stirnwände 11, 12 oder an der Umfangsfläche des Gehäuses 10' angeordnet werden. Bei dem Ausführungsbeispiel nach Fig. 11, sind der Druckanschluß 13 und der Tankanschluß 14 an der Umfangswand des Gehäuses 10' übereinander angeordnet. Der Abstand zwischen diesen Anschlüssen 13 und 14 entspricht mindestens der Dicke des zylindrischen Mittelteiles 38, durch das diese Anschlüsse im Gehäuseinnern voneinander getrennt werden. Die Verbraucheranschlüsse 15 und 16 sind dagegen in der oberen Stirnwand 11 einander gegenüberliegend angeordnet. Die durch die Anschlüsse 15 und 16 hindurchgehende Gerade verläuft in Draufsicht rechtwinklig zu demjenigen Radius des Gehäuses, auf dem die Anschlüsse 13 und 14 angeordnet sind.

Eine weitere Variante des Gehäuses 10'' ist in Fig. 12 dargestellt. Hier befinden sich der Druckanschluß 13 und der Tankanschluß 14 an einander auf einem gemeinsamen Durchmesser entgegengesetzten Stellen der Stirnwand 11. Auf einem rechtwinklig zu diesem Durchmesser verlaufenden Radius ist der Verbraucheranschluß 15 ebenfalls an der Stirnwand 11 angeordnet. Der Verbraucheranschluß 16 befindet sich dagegen im unteren Bereich der Umfangswand des Gehäuses unterhalb des Verbraucheranschlusses 15.

Es gibt zahlreiche andere Kombinationsmöglichkeiten, die verschiedenen Anschlüsse 13 bis 16 anzuordnen. Diese Anschlüsse können auch in der unteren Stirnwand 12 des Gehäuses angeordnet werden, jedoch würde wegen der erforderlichen Anschlußstutzen die Achse 18 verlängert werden müssen.

Bei dem in Fig. 10 dargestellte Ventilkörper 37 bewirkt einen Druckausgleich dadurch, daß in der Ausnehmung 19' der gleiche Druck herrscht, wie in der Ausnehmung 19, und in der Ausnehmung 20' ebenfalls der gleiche Druck wie in der Ausnehmung 20. Wenn die Flächen der Seitenwände der Stege 21 und 22 etwa die gleiche Fläche haben wie die Stirnwand des Mittelteiles 38 in dem betreffenden Quadranten, dann wirkt der Druck in der Ausnehmung 19 unter einem Winkel von etwa 45° zur Achse 18. Wenn in der Ausnehmung 19' die gleichen Flächenrelationen vorhanden sind, wirkt der Druck in der Ausnehmung 19' ebenfalls unter 45° zur Achse 18, wobei die Drücke in den Ausnehmungen 19 und 19' sich gegenseitig aufheben. In gleicher Weise erfolgt zwischen den Ausnehmungen 20 und 20' eine Druckkompensation.

Das erfindungsgemäße Drehventil der Fig. 13 weist einen ersten Gehäuseteil 40 auf, der den Ventilkörper 17 in einer Axialbohrung 42 enthält, und einen zweiten Gehäuseteil 41, der auf einer zylindrischen Fläche des ersten Gehäuseteils 40 drehbar angeordnet ist. Der zweite Gehäuseteil 41 stößt an seinem einen Ende gegen eine Ringschulter 43 und an seinem anderen Ende gegen einen Sicherungsring 44, der an dem Ende des zylindrischen Teiles des ersten Gehäuseteiles 40 befestigt ist, so daß der zweite Gehäuseteil 41 relativ zu dem ersten Gehäuseteil 40 in axialer Richtung festgelegt ist, jedoch frei rotieren kann.

An dem zweiten Gehäuseteil 41 befinden sich der Druckanschluß 13 und der Tankanschluß 14, die zu Verbindungsstücken 45 führen, von denen in Fig. 13 nur eines sichtbar ist. Der Druckanschluß 13 und der Tankanschluß 14 stehen jeweils mit einer Ringnut 46 bzw. 47 des zweiten Gehäuseteiles 41 in Verbindung. Jeder dieser Ringnuten 46, 47 wird durch O-Ringe 48 seitlich begrenzt.

Von der mit dem Druckeinlaß 13 verbundenen Ringnut 47 führt eine Querbohrung 49 zu einer Axialbohrung 50 des ersten Gehäuseteiles 40. Die Querbohrung 49 steht außerdem über eine Längsbohrung 51 und eine durch die Längsbohrung 51 hindurchgehende Radialbohrung 52 mit der Kammer 42 in Verbindung. Die gegenüberliegende Seite der Kammer 42 steht über eine Radialbohrung 53 und eine diese kreuzende Axialbohrung 54 mit einer weiteren Radialbohrung 55 in Verbindung, die einerseits mit der Axialbohrung und andererseits mit der Ringnut 46 verbunden ist. Die Bohrungen 49, 50 und 55 bilden somit eine Kurzschlußleitung, die die Ringnuten 46 und 47 untereinander verbindet.

In der Axialbohrung 50 befindet sich ein Schieber 56, der gegen die Wirkung einer Feder 57 zurückgedrückt wird, so daß er die Mündung der Radialbohrung 49 in die Axialbohrung 50 völlig freigibt. Der Schieber 56 ist mit einem O-Ring 70 in der Axialbohrung 50 abgedichtet. Das rückwärtige Ende des Schiebers 56 stößt gegen ein Betätigungsorgan 58, bei dem es sich um einen Hebel handelt, der im Innern eines Handgriffs 59 an einem Drehzapfen 60 gelagert ist und dessen eines Ende an der Rückwand des Schiebers 56 anliegt. Die Endstellung des Schiebers 56 und des Betätigungsorgans 58 ist durch einen Anschlag im Innern des Handgriffs 59 vorgegeben. Wird das freie Ende des Betätigungsorgans 58 in den Handgriff 59 hineingedrückt, dann wird der Schieber 56 vorgeschoben, wobei er die Mündungsöffnung der Radialbohrung 49 zunehmend verschließt. Hierbei wird die Feder 57 zusammengedrückt. Bei dieser Bewegung des Schiebers 56 wird der Durchlaßquerschnitt der Kurzschlußleitung 49, 50, 55 verändert. Wenn die Kurzschlußleitung vollständig geschlossen ist, wirkt der volle Druck des Druckanschlusses 13 an dem Ventilkörper 17.

Der Ventilkörper 17 ist im wesentlichen genauso ausgebildet wie der Ventilkörper der Fig. 1 bis 6, jedoch sind die Bohrungen 31 und 32 sowie die seitlichen Druckentlastungskammern 30 fortgelassen. Der Ventilkörper 17, der in der Kammer 42 angeordnet ist, ist an seinem rückwertigen Ende durch die Feder 57 abgestützt, die in der Axialbohrung 50 untergebracht ist. Die Kammer 42 steht daher mit der Axialbohrung 57 in direkter Verbindung. An der gegenüberliegenden Seite weist der Ventilkörper 17 einen in einer umlaufenden Nut untergebrachten O-Ring 61 auf, der die Kammer 42 nach außen hin abdichtet.

Die Verbraucheranschlüsse 15, 16 führen in axialer Richtung aus dem ersten Gehäuseteil 40 heraus, in das Gehäuse 62 eines Hydraulikmotors hinein, der fest mit dem ersten Gehäuseteil 40 verbunden ist. Um den Ventilkörper 17 drehen zu können, ist an dem Ventilkörper ein Vierkantansatz 63 vorgesehen, der in einer Ausnehmung des Gehäuses 62 hineinragt. Das Gehäuse 62 weist außerdem einen kreissegmentförmigen Spalt 64 auf, durch den ein auf den Vierkantansatz 63 aufgesteckter Arm 65 radial nach außen ragt. An dem Ende des Armes 65 befindet sich ein Knopf 66, der in einem Winkel von etwa 90° zur Achse des Ventilkörpers 17 geschwenkt werden kann, um den Ventilkörper von derjenigen Stellung, die in Fig. 14 in ausgezogenen Linien dargestellt ist, in diejenige Stellung zu bringen, die in Fig. 14 strichpunktiert angegeben ist. Die Verstellung des Ventilkörpers 17 erfolgt immer dann, wenn die Kurzschlußleitung 49, 50, 55 geöffnet ist, d. h. wenn der Schieber 56 sich in dem in Fig. 13 dargestellten Ruhezustand befindet. In diesem Fall wirken auf den Ventilkörper 17 keine Radialkräfte ein, die das Verdrehen des Ventilkörpers behindern würden. Wird dagegen die Kurzschlußleitung 49, 50, 55 gedrosselt oder ganz abgesperrt, dann wirkt durch die Radialbohrung 52 ein erheblicher Druck auf den Ventilkörper 17, so daß dieser dann nicht mehr verstellt werden kann. Bei dem Ausführungsbeispiel der Fig. 13 und 14 erfolgt das sanfte Anfahren des Hydraulikmotors durch langsames Einziehen des Betätigungsorgans 58 in den Handgriff 59, so daß der Ventilkörper 17 immer nur auf eine seiner beiden Endstellungen voreingestellt werden, aber keine Zwischenstellung einnehmen muß.

Der zweite Gehäuseteil 41, der auf dem ersten Gehäuseteil 40 frei drehbar ist, ist an seiner einen Stirnseite durch einen angeschraubten Deckel 67 verschlossen, an dem der Handgriff 59 befestigt ist. Der Deckel 67 weist eine Öffnung auf, durch die der Schieber 56 in das Innere des Handgriffs 59 eindringt und dort gegen das Betätigungsorgan 58 drückt. Die gesamte in Fig. 13 dargestellte Vorrichtung zusammen mit dem Hydraulikmotor, der sich in dem Gehäuse 62 befindet, stellt ein Handgerät dar, aus dem eine von dem Hydraulikmotor angetriebene Welle herausragt, an der beispielsweise eine Schlüsselnuß zum Festziehen einer Schraube befestigt werden kann. Hierbei ist es erforderlich, daß Gehäuse 62 zusammen mit dem ersten Gehäuseteil 40 an einem externen Stützelement abzustützen, damit sich nicht das Gehäuse 62 dreht, während die (nicht dargestellte) Ausgangswelle von dem Schraubenkopf festgehalten wird. Wenn das Stützelement abrutscht, dann dreht sich das Gehäuse 62 zusammen mit dem ersten Gehäuseteil 40. Der Handgriff 59 kann jedoch weiterhin in der Hand gehalten werden, ohne daß die betreffende Person Schaden erleidet, weil der zweite Gehäuseteil 41 sich nicht mitdreht. Dadurch wird auch verhindert, daß die an die Anschlußvorrichtungen 45 angeschlossenen (nicht dargestellten) Schläuche sich aufwickeln.

In Fig. 13 sind die Bohrungen 51, 52 und 54 jeweils an einem Ende durch einen Stopfen 68 verschlossen. Die Stopfen sind aus fertigungstechnischen Gründen erforderlich, um die betreffenden Bohrungen jeweils von einer Außenwand des ersten Gehäuseteils 40 aus bohren zu können. Danach werden die Anfänge der genannten Bohrungen mit dem Stopfen 68 druckdicht verschlossen.

**Patentansprüche**

1. Hydraulisches Drehventil mit einem Gehäuse (41), das einen Druckanschluß (13), einen Tankanschluß (14) sowie mindestens zwei an einen Verbraucher anschließbare Verbraucheranschlüsse (15, 16) aufweist, die mit einer zylindrischen Kammer (42) verbunden sind, und mit einem in der Kammer drehbar angeordneten Ventilkörper (17), der jeweils über einen Teil seines Umfangs sich erstreckende, durch Dichtflächen voneinander getrennte Ausnehmungen (19, 20) aufweist, durch die jeweils der Druckanschluß (13) und der Tankanschluß (14) mit den Verbraucheranschlüssen (15, 16) verbindbar sind, dadurch gekennzeichnet, daß der Druckanschluß (13) mit dem Tankanschluß (14) über eine Kurzschlußleitung (49, 50, 55) verbunden ist, in der sich eine Stelle mit veränderbarem Durchlaßquerschnitt befindet und daß ein Betätigungsorgan (58) vorgesehen ist, mit dem ein Drosselelement (56) zur Veränderung des Durchlaßquerschnitts der Kurzschlußleitung (49, 50, 55) verstellbar ist.

2. Drehventil nach Anspruch 1, dadurch gekennzeichnet, daß das Drosselelement (56) in Richtung auf die vollständige Öffnung der Kurzschlußleitung (49, 50, 55) vorgespannt ist.

3. Drehventil nach Anspruch 1 oder 2, dadurch gekennzeichnet, daß der Druckanschluß (13), der Tankanschluß (14) und das Betätigungsorgan (58) an einem zweiten Gehäuseteil (41) angebracht sind, welcher relativ zu dem die Kammer (42) mit dem Ventilkörper (17) enthaltenden ersten Gehäuseteil (40) frei drehbar ist, und daß die Verbindung des Druckanschlusses (13) und des Tankanschlusses (14) mit der Kammer (42) über Ringnuten (46, 47) erfolgt.

4. Drehventil nach einem der Ansprüche 1 bis 3, dadurch gekennzeichnet, daß die Ausnehmungen (19, 20) eine solche Umfangserstreckung haben, daß in jeder möglichen Drehstellung des Ventilkörpers (17) der Druckanschluß (13) mit einem der Verbraucheranschlüsse (15, 16) und der Tankanschluß (14) mit dem anderen Verbraucheranschluß verbunden ist, und daß der Druckanschluß (13) auf zwei parallelen Wegen über zwei Ausnehmungen (19, 20) an den Verbraucheranschlüssen (15, 16) vorbei mit dem Tankanschluß (14) verbindbar ist.

## Claims

1. Hydraulic rotating valve with a casing (41) having a pressure connection (13) , and a tank connection (14) as well as at least two connections for the receiving connections (15, 16), connected to a cylindrical chamber (42) and having a rotatable valve body (17) featuring recesses (19, 20) separated by packing surfaces along one section of its circumference, with the pressure connection (13) and the tank connection (14) each connectable to the receiver connections (15, 16) through one of the recesses. The characteristic features of the valve in question are that the pressure connection (13) is connected to the tank connection (14) via a short-circuit line (49, 50, 55) which has one place with a variable pass-band section, and that an operating element (58) is provided, which adjusts a choke element (56) used for altering the pass-band section of the short circuit line (49, 50, 55).

2. Rotating valve as detailed in claim 1, the characteristic feature of which is that the choke element (56) is pre-tensioned in the direction of the complete opening of the short-circuit line (49, 50, 55).

3. Rotary valve as detailed in claims 1 or 2, the characteristic feature of which is that the pressure connection (13), the tank connection (14) and the operating element (58) are affixed to a second casing section (41), which is freely rotatable in relation to the first casing section (40) containing the chamber (42) with the valve body (17), and that the pressure connection (13) and the tank connection (14) are connected to the chamber (42) by means of annular grooves (46, 47).

4. Rotating valve as detailed in one of the claims 1 to 3, the characteristic feature of which is that the recesses (19, 20) extend so far along the circumference, that the pressure connection (13) is connected to one of the receiving connections (15, 16) and the tank connection (14) is connected to the other receiving connection with the valve body (17) being in any desired rotated position, and that the pressure connection (13) can be linked to the tank connection (14) along two parallel lines over two recesses (19, 20) past the receiver connections (15, 16).

## Revendications

1. Soupape hydraulique et rotative comportant un boîtier (41) qui présente un raccord de pression (13), un raccord de réservoir (14) ainsi qu'au moins deux raccords d'utilisation (15, 16) pouvant être reliés à un appareil d'utilisation, qui communiquent avec une chambre cylindrique (42), et comportant par ailleurs un corps de soupape (17) monté de façon à pouvoir tourner dans la chambre et présentant des évidements (19, 20) qui s'étendent respectivement sur une partie de sa périphérie en étant séparés les uns des autres par des surfaces d'étanchéité et par l'intermédiaire desquels le raccord de pression (13) et le raccord de réservoir (14) peuvent être mis respectivement en communication avec les raccords d'utilisation (15, 16), caractérisée par le fait que le raccord de pression (13) communique avec le raccord de réservoir (14) à travers un conduit de court-circuit (49, 50, 55) dans lequel se trouve un emplacement à section transversale de passage variable et qu'il est prévu un organe d'actionnement (58) à l'aide duquel peut être déplacé un élément d'étranglement (56) pour faire varier le section transversale de passage du conduit de court-circuit (49, 50, 55) .

2. Soupape rotative selon la revendication 1, caractérisé par le fait que l'élément (56) est préchargé dans la direction de l'ouverture complète du conduit de court-circuit (49, 50, 55).

3. Soupape rotative selon la revendication 1 ou 2, caractérisée par le fait que le raccord de pression (13), le raccord de réservoir (14) et l'organe d'actionnement (58) sont ménagés sur une deuxième partie de boîtier (41) qui peut tourner librement par rapport à la première partie de boîtier (40) renfermant la chambre (42) munie du corps de soupape (17) et que la communication du raccord de pression (13) et du raccord de réservoir (14) avec la chambre (42) s'effectue à travers des gorges annulaires (46, 47).

4. Soupape rotative selon l'une quelconque des revendications 1 à 3, caractérisée par le fait que les évidements (19, 20) ont une extension périphérique telle que dans chaque position de rotation possible du corps de soupape (17) le raccord de pression (13) est mis en communication avec l'un des raccords d'utilisation (15, 16) tandis que le raccord de réservoir (14) est mis en communication avec l'autre raccord d'utilisation, et que le raccord de pression (13) peut être mis en communication avec le raccord de réservoir (14) suivant deux voies parallèles à travers deux évidements (19, 20) en passant devant les raccords d'utilisation (15, 16).

0 048 680

FIG.1

FIG. 3

FIG. 4

FIG. 2

FIG. 5

FIG. 6

9

# FIG. 7

# FIG.9

# FIG. 8

FIG.10

FIG.11

FIG.12

0 048 680

FIG.13

FIG.14

15